# EUROPEAN PATENT APPLICATION

(11) **EP 4 755 187 A1**
(43) Date of publication of application: **10.06.2026**
(21) Application number: 25212346.8
(22) Date of filing: 30.10.2025
(51) Int. Cl.: A21B 3/13

(54) **REMOVAL SYSTEM FOR REMOVING FOOD BAKING PAN LIDS AND FOOD BAKING PAN**

(30) Priority: 03.12.2024 ES 202431005
(71) Applicant: Juan Y Juan Industrial, S.L.U., 46720 Villalonga Valencia (ES)
(72) Inventor: JUAN FERNANDEZ, Rafael, 46720 Villalonga (Valencia) (ES)
(74) Representative: Ungria López, Javier

(57) **Abstract**

The present invention relates to a food baking pan (1) comprising: at least one hollow element (3) which shape is equivalent to a shape of a food to be baked; a frame (5) configured to hold several hollow elements (3) and to be displaced by a conveyor device (6); a lid (2) covering the at least one hollow element (3). The lid (2) is made of ferromagnetic materials and the frame (5) comprises attracting magnets (4) configured to keep the lid (2) against the hollow elements (3) at temperatures above 100° Celsius. The invention further relates to a removal system for removing the lid with removing magnets (7), which are made of samarium-cobalt.

## Description

### OBJECT OF THE INVENTION

The present invention relates to a food baking pan and to a removal system for removing food baking pan lids along conveyor devices of the pan, once the pan has passed through an oven at more than 100°C in order to bake the food contained in the pan.

The invention is particularly applicable in the field of food industry techniques, and especially in food production industries that require ovens of more than 100°C to process the food.

### BACKGROUND OF THE INVENTION AND TECHNICAL PROBLEM TO BE SOLVED

In the food industry, and for the production of certain foods such as sliced bread, it is necessary to have pans with a lid to produce sliced bread. The pans, together with their respective lid, are placed in ovens at approximately 220°C for a predetermined time in order to make the dough inside them grow.

The pans are usually placed on roller or belt conveyor devices that convey the pans from the initial step where the pan receives the dough to be baked and the lid; subsequently, the pan-lid assembly with the dough therein goes to the baking oven, and in its final phase, the lid is taken off the pan and the baked food is removed for packaging and storage in its final phase.

Therefore, when the pan comes out of the oven, it is first necessary to take off the lid and then, by means of a pair of suction elements, remove the sliced bread dough from the pan itself.

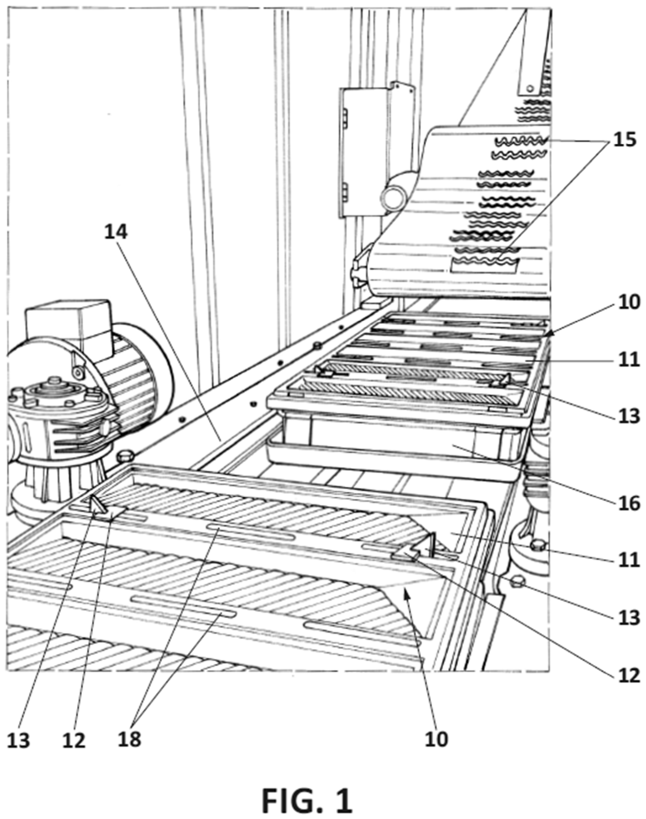

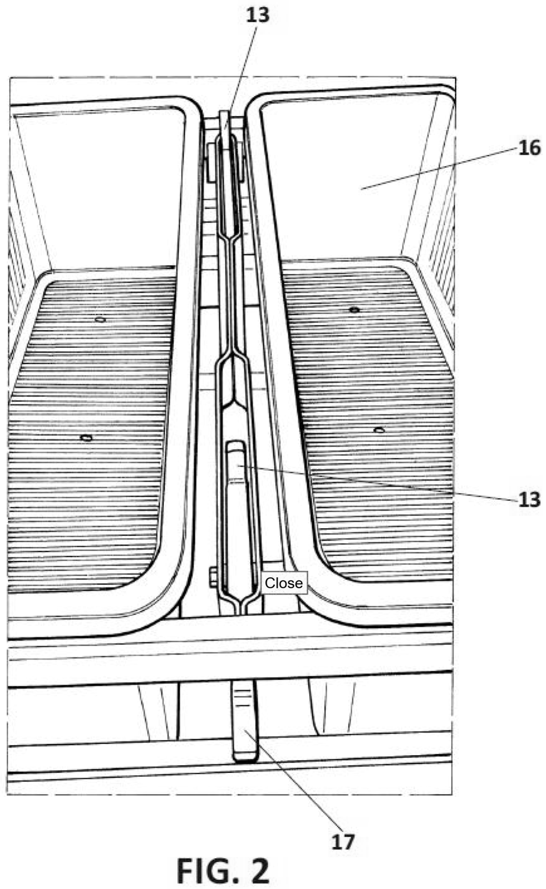

In the state of the art (Figures 1 and 2), the lids are secured to the pan and removed from the pan by mechanical means. Specifically, the lid is secured to the pan (or set of pans joined by a frame) by pivoting hooks that act on platens arranged on the lid. When the pan comes out of the oven, actuators cause the hooks to stop retaining the platens so that mechanical extractors can then remove the lid. The mechanical extractors consist of toothed projections that are inserted into grooves in the lid such that the toothed projections open to secure the lid and close to release the lid.

The problems with the system for securing and releasing the lid on the pan are, on the one hand, that the lid suffers wear in the grooves where the toothed projections are inserted to such an extent that the groove widens and the entire lid has to be replaced with a new one. On the other hand, the heat generated by the oven causes the springs that keep the hooks in the closed position to lose their elastic properties and the springs also have to be replaced with new ones.

There is therefore a need in the state of the art for a system for securing and releasing the lid that avoids the aforementioned drawbacks.

### DESCRIPTION OF THE INVENTION

In a first aspect of the invention, a food baking pan is disclosed. The food baking pan comprises:
- at least one hollow element which shape is equivalent to a shape of a food to be baked;
- a frame configured to hold the at least one hollow element and to be displaced by a conveyor device;
- a lid covering the at least one hollow element;
wherein the lid is made of ferromagnetic materials and the frame comprises attracting magnets configured to keep the lid against the at least one hollow element at temperatures above 100° Celsius.

It should be noted that as soon as neodymium rare earth magnets are exposed to temperatures above 100°C, the magnetic strength is compromised until it disappears.

In one embodiment of the invention, the pan comprises at least two hollow elements. Preferably, the frame is configured to hold six hollow elements.

In another embodiment of the invention, the hollow element(s) comprise(s) a non-stick treatment on the inner walls of each of the hollow elements.

In another embodiment of the invention, the attracting magnets are samarium-cobalt magnets. Preferably, the samarium-cobalt magnets are of the 2:17 type. These magnets, unlike other magnets, maintain their magnetic qualities above 100°C and up to 550°C.

In another embodiment of the invention, the attracting magnets are located on top platens of the frame that face the lid when the lid covers the frame. In other words, when the lid covers the at least one hollow element or the at least two hollow elements, the lid, made of ferromagnetic material, is in contact with the attracting magnets in such a way that the lid is secured to the pan by the magnetic attraction of the attracting magnets.

In a second aspect of the invention, a removal system for removing food baking pan lids is disclosed, wherein the food baking pans are those referred to in the first aspect of the invention and all the embodiments thereof. Therefore, the removal system for removing food baking pan lids comprises the food baking pan of the first aspect of the invention together with all the embodiments thereof, and additionally comprises a conveyor device, which in turn comprises pan displacement means and lid removal means. The lid removal means comprise removing magnets, wherein the removal means are configured to bring the removing magnets into contact with the lid, and wherein the sum of the magnetic forces of the removing magnets is greater than the sum of the magnetic forces of the attracting magnets. This makes it possible to keep the lid secured to the pan during baking in the oven by magnetic forces alone, as well as take the lid off the pan when it comes out of the oven without wearing down mechanical parts and avoiding the need to replace springs and lids (among other elements) as was the case in the state of the art.

In one embodiment of the invention, the lid removal means may comprise at least one extractor belt with links which, located on the lid, allows contact between the removing magnets and the lid, the removing magnets being located on the links of the at least one extractor belt.

On the other hand, the pan displacement means can be rollers or belts.

Lastly, in another embodiment of the invention, the removing magnets may be selected from neodymium magnets, samarium-cobalt magnets and 2:17-type samarium-cobalt magnets.

### BRIEF DESCRIPTION OF THE DRAWINGS

To complete the description of the invention, and for the purpose of helping to make the features thereof more readily understandable, according to a preferred exemplary embodiment thereof, a set of drawings is included wherein, by way of illustration and not limitation, the following figures have been represented:
Figure 1 shows a removal system for removing food baking pan lids according to the state of the art.
Figure 2 shows a lid retention system according to the state of the art.
Figure 3 shows the removal system for removing food baking pan lids of the present invention.
Figures 4 and 5 show food baking pans according to the present invention. In particular, the attracting magnets are shown.

A list of the references used in the figures is provided below:
1.- Food baking pan;
2.- Lid of the food baking pan;
3.- Hollow element;
4.- attracting magnets;
5.- frame; 5': top platen of the frame;
6.- conveyor device; 6': pan displacement means: rollers or belts;
7.- removing magnets;
8.- extractor belt; 8': links of the extractor belt;
9.- not used;
10.- pan of the state of the art;
11.- lid of the state of the art;
12.- platens arranged on the lid of the state of the art;
13.- pivoting hooks of the state of the art;
14.- conveyor belt of the state of the art;
15.- toothed projections of the state of the art;
16.- hollow elements of the state of the art;
17.- thrust elements of the state of the art;
18.- grooves in the lid of the state of the art 11.

### DESCRIPTION OF A PREFERRED EMBODIMENT OF THE INVENTION

Figures 1 and 2 represent the state of the art. In particular, Figure 1 shows the conveyor belt 14 of the state of the art on which the pan 10 of the state of the art moves. As shown in Figure 1, the lids 11 are secured to the hollow elements 16 by means of the pivoting hooks 13 that act on the platens 12 arranged on the lid 11. When the pan 10 comes out of the oven (not shown), actuators provided on the conveyor belt 14 press the thrust elements 17 (see Figure 2) against the action of springs (not shown) and cause the hooks 13 to stop retaining the platens 12 so that mechanical extractors can then remove the lid 11. The mechanical extractors consist of the toothed projections 15 that are inserted into the grooves 18 in the lid 11 such that the toothed projections open to secure the lid and close to release the lid.

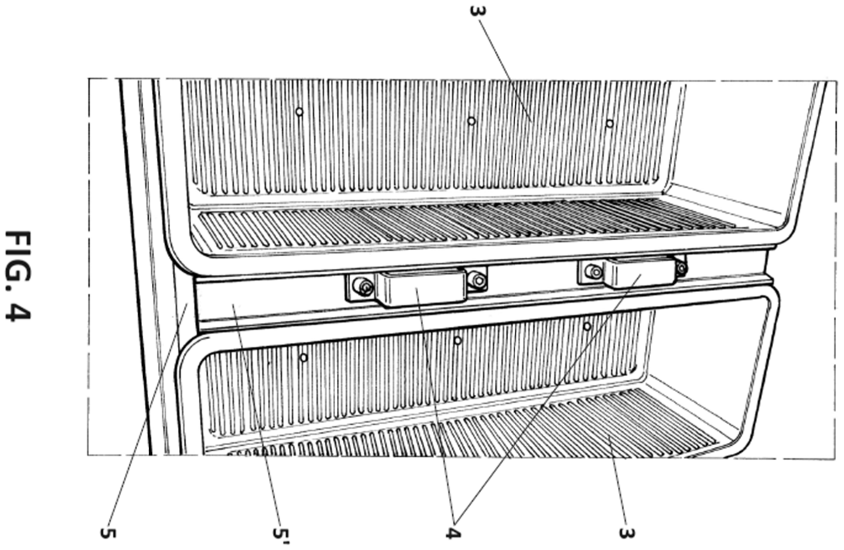

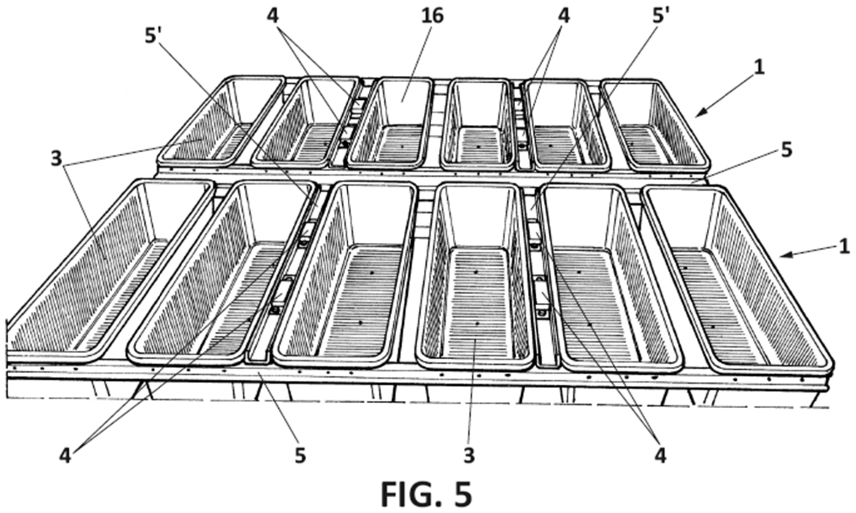

Figures 4 and 5 show the pan 1 of the present invention without a lid. Figure 5 shows two pans 1 located in parallel, where each of the pans 1 has its own frame 5 supporting six hollow elements 3. The platens 5' are also shown, which separate each set of two hollow elements 3, where the platens 5' are arranged at the top of the hollow elements 3. The attracting magnets 4 are placed on the platens 5' (see enlarged details in Figure 4). The attracting magnets 4 are flush with the upper edge of the hollow elements 3, so that the lid 2 is in full contact with the upper edges of the hollow elements 3. This helps to maintain optimum cooking/baking conditions when the pan 1 is placed in a cooking/baking oven. Furthermore, the attracting magnets 4 are samarium-cobalt magnets, which are resistant to temperatures between 100°C and 550°C, and which maintain their magnetic properties, allowing the lid 2 to be secured to the hollow elements 3.

As shown in Figures 4 and 5, the hollow elements 3 comprise a non-stick treatment on the inner walls of the hollow element. The hollow elements 3 also comprise notches and an inverted trapezoidal shape to facilitate the removal of the food to be cooked/baked, which, in the case shown in both Figures 4 and 5, is sliced bread.

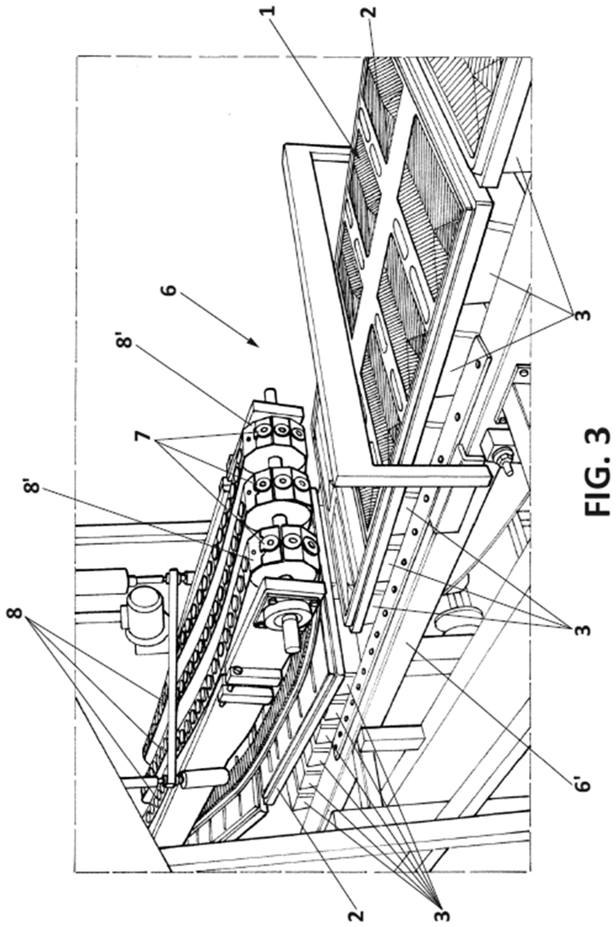

Figure 3 shows the removal system for removing food baking pan lids of the present invention. Specifically, Figure 3 shows the conveyor device 6 on which the food baking pan 1 including the lid 2 and six hollow elements 3 is displaced. The food baking pan 1 is displaced by the pan displacement means 6', which are rollers in Figure 3. The lid 2 is made of a ferromagnetic material, namely iron (Fe) alloys with a high Curie number (above 600°C), to resist the heat of the baking oven on the one hand, and to maintain its magnetic properties on the other hand. This allows the lid to be magnetically attracted during baking, as well as later during removal of the lid from the pan by the lid removal means.

Continuing with Figure 3, the lid removal means comprise three extractor belts 8, each consisting of links 8' and the removing magnets 7 located on each link 8'. It is not necessary for all the links to have removing magnets. Only the condition that the sum of the magnetic forces of the extracting magnets 7 on the lid is greater than the sum of the magnetic forces of the attracting magnets 4 has to be fulfilled.

As can be seen in Figure 3, the extractor belts 8 are of the "caterpillar" type with fastening at the ends, which allows the extractor belts 8, through the action of gravity, to have a convex shape that brings the removing magnets 7 closer to the lid 2.

## Claims

1. A food baking pan (1) comprising:
• at least one hollow element (3) which shape is equivalent to a shape of a food to be baked;
• a frame (5) configured to hold the at least one hollow element (3) and to be displaced by a conveyor device (6);
• a lid (2) covering the at least one hollow element (3);
**characterised in that** the lid (2) is made of ferromagnetic materials and **in that** the frame (5) comprises attracting magnets (4) configured to keep the lid (2) against the at least one hollow element (3) at temperatures above 100° Celsius.

2. The food baking pan of claim 1, wherein the pan comprises at least two hollow elements (3).

3. The food baking pan of claim 1, wherein the at least one hollow element (3) comprises a non-stick treatment on the inner walls of the hollow element.

4. The food baking pan of claim 1, wherein the attracting magnets (4) are samarium-cobalt magnets.

5. The food baking pan of claim 4, wherein the samarium-cobalt magnets are of the 2:17 type.

6. The food baking pan according to any one of the preceding claims, wherein the attracting magnets (4) are located on top platens of the frame that face the lid when the lid covers the frame.

7. A removal system for removing food baking pan lids, **characterised in that** it comprises:
• a pan (1) according to any one of claims 1 to 6;
• a conveyor device (6), comprising:
∘ pan displacement means (6');
∘ lid removal means (7,8,8'), which in turn comprise removing magnets (7), wherein the removal means are configured to bring the removing magnets (7) into contact with the lid (2), and wherein the sum of the magnetic forces of the removing magnets is greater than the sum of the magnetic forces of the attracting magnets.

8. The removal system for removing pan lids of claim 7, wherein the lid removal means comprise at least one extractor belt (8) with links (8') which, located on the lid (2), allows contact between the removing magnets (7) and the lid (2), the removing magnets (7) being located on the links of the at least one extractor belt (8).

9. The removal system for removing pan lids of claim 7, wherein the pan displacement means (6') are selected from rollers and belts.

10. The removal system for removing pan lids according to one of claims 7 and 8, wherein the removing magnets (7) are selected from neodymium magnets, samarium-cobalt magnets and 2:17-type samarium-cobalt magnets.
